# EUROPÄISCHE PATENTSCHRIFT

(11) **EP 1 910 775 B1**
(45) Veröffentlichungstag und Bekanntmachung des Hinweises auf die Patenterteilung: **09.09.2015**
(21) Anmeldenummer: 06763698.5
(22) Anmeldetag: 14.06.2006
(51) Int. Cl.: G01C 19/56

(54) **DREHRATENSENSOR**
RATE-OF-TURN SENSOR
CAPTEUR DE VITESSE DE ROTATION

(30) Priorität: 26.07.2005 DE 102005034703
(43) Veröffentlichungstag der Anmeldung: 16.04.2008
(73) Patentinhaber: ROBERT BOSCH GMBH, 70442 Stuttgart (DE)
(72) Erfinder: STEINLECHNER, Siegbert, 71229 Leonberg (DE)
(86) Internationale Anmeldenummer: PCT/EP2006/063186
(87) Internationale Veröffentlichungsnummer: WO 2007/012520

(56) Entgegenhaltungen:
- GAISZER A ET AL: "New digital readout electronics for capacitive sensors by the example of micro-machined gyroscopes" SENSORS AND ACTUATORS A, ELSEVIER SEQUOIA S.A., LAUSANNE, CH, Bd. 97-98, 1. April 2002 (2002-04-01), Seiten 557-562, XP004361651 ISSN: 0924-4247

## Beschreibung

### Technisches Gebiet:

Die Erfindung betrifft ein Verfahren zum Antrieb und zur gleichzeitigen Auswertung eines Drehratensensors, gemäß Anspruch 1, sowie eine Schaltungsanordnung zur Durchführung des erfindungsgemäßen Verfahrens, gemäß Anspruch 6.

### Stand der Technik:

Mikromechanische Drehratensensoren werden beispielsweise in Kraftfahrzeugen für die Funktion des Elektronischen Stabilitätsprogramms, ESP, oder für den Wankneigungsausgleich eingesetzt. Sie messen mit Hilfe des Corioliseffekts beispielsweise die Drehrate um die Hochachse des Fahrzeugs oder um dessen Längsachse.

In mikromechanischen Drehratensensoren befinden sich eine oder mehrere elastisch aufgehängte Schwingerelemente, die mit Hilfe zeitlich periodischer, elektrostatisch aufgebrachter Antriebskräfte F(t) in periodische Schwingungen versetzt werden. Die Schwingerelemente sind dabei vereinfacht als elastisch aufgehängte Massen m anzusehen.

Die Ebene, in der das flache Schwingerelement liegt, sei die x-y-Ebene. Wird die in x-Richtung schwingende Masse m um die normal zur x-y-Ebene verlaufende z-Achse, welche beispielsweise die Hochachse des Fahrzeugs sein kann, mit einer Drehrate Ω gedreht, erfährt die Masse m eine zusätzliche periodische Beschleunigung in γ-Richtung, die der Drehrate Ω proportional ist. Diese Beschleunigung ist als Coriolis-Beschleunigung bekannt. Um diese Beschleunigung zu messen, sind spezielle Messvorrichtungen notwendig, beispielsweise eine an der das Schwingerelement bildenden Masse m elastisch angekoppelte zweite Masse m_{c}, die in y-Richtung schwingen kann, sowie beispielsweise zwei Messkondensatorgruppen zur Messung des Schwingungsverlaufs in y-Richtung. Diese zweite Masse wird im Folgenden als Coriolis-Masse m_{C} bezeichnet. Die Coriolis-Masse m_{C} bildet vereinfacht betrachtet ein an dem Schwingerelement elastisch angeordnetes Coriolis-Element. Dabei kann das Schwingerelement Schwingungsbewegungen entlang einer ersten, die x-Achse bildenden Schwingungsachse ausführen, wobei das Coriolis-Element entlang einer zweiten, normal zu der ersten Schwingungsachse verlaufenden, die y-Achse bildende Schwingungsachse Schwingungsbewegungen ausführen kann.

Solche Sensoren werden sowohl für das die Masse m umfassende Schwingerelement als auch für das die Coriolis-Masse m_{C} umfassende Coriolis-Element auf der mechanischen Resonanzfrequenz betrieben. Dazu muss die Anregungsfrequenz der Antriebskraft F(t) geeignet gewählt und/oder geregelt werden. Bei der Resonanzfrequenz herrscht zwischen der durch die Antriebskraft F(t) hervorgerufenen Bewegungsgeschwindigkeit v(t) der Masse m und der Antriebskraft F(t) keine Phasenverschiebung. Ebenso herrscht im Resonanzfall zwischen der durch die Coriolis-Beschleunigung hervorgerufenen Coriolis-Geschwindigkeit v_{c}(t) der Coriolis-Masse m_{c} und der Antriebskraft F(t) keine Phasenverschiebung.

Die Auswertung der Bewegung der Coriolis-Masse m_{c} kann direkt über eine so genannte open loop Schaltungsanordnung, oder über eine auch als closed loop bekannte Kraftgegenkopplungsschleife erfolgen. Bei der Kraftgegenkopplung sorgt ein Regler durch eine zusätzlich auf die Coriolis-Masse m_{c} aufgebrachte elektrostatische Kompensationskraft F_{c}(t) dafür, dass die Coriolis-Masse m_{c} keine Schwingung in Richtung der y-Achse ausführt und in dieser Richtung in Ruhe bleibt, auch wenn eine Drehrate Ω vorhanden ist. In diesem Fall stellt die aufzuwendende Kraft F_{c}(t) ein Maß für die Drehrate Ω dar.

Eine Kraftgegenkopplungsschleife hat den Vorteil, dass die Auswertebandbreite über die Reglerparameter einstellbar ist, und dass Fehler durch Nichtlinearitäten im Sensor, wie etwa nichtlineare Federn an der Coriolis-Masse m_{c} deutlich reduziert werden.

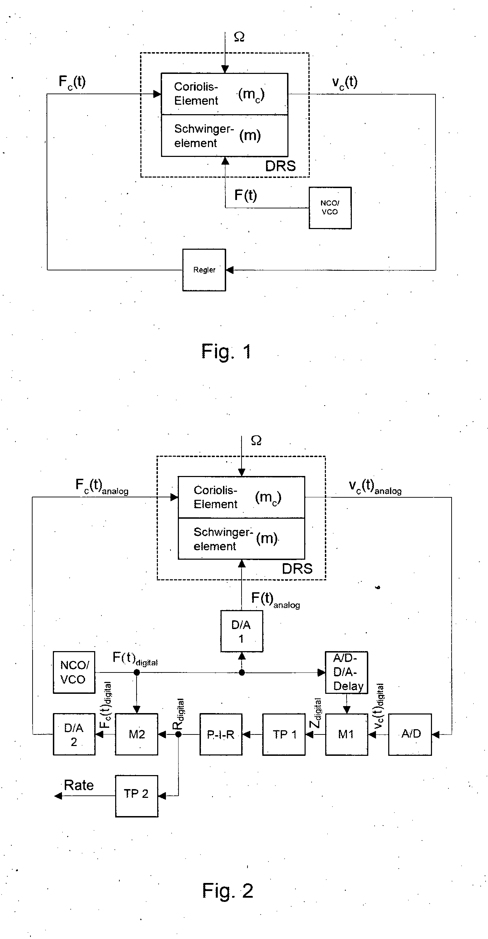

Fig. 1 zeigt ein Blockschaltbild mit einem Drehratensensor DRS und einer Realisierung einer Kraftgegenkopplung nach dem Stand der Technik. Der Block VCO/NCO, voltage/numerical controlled oscillator, umfasst einen Oszillator, der das sinusförmige Antriebssignal zur Erzeugung der Antriebskraft F(t) für das Schwingerelement mit der Masse m liefert. Die Frequenz des Antriebssignals und damit der Antriebskraft F(t) wird durch eine nicht dargestellte Regelung auf der Resonanzfrequenz des Schwingerelements gehalten, die Amplitude von F(t) wird durch einen die Amplitude des Antriebssignal regelnden Amplitudenregler stabilisiert. Drehratensensoren mit Kraftgegenkopplung sind beispielsweise aus DE 102 37 410 A1 und aus DE 102 37 411 A1 bekannt.

Wird die Kraftgegenkopplung so realisiert, dass die gemessene Coriolis-Geschwindigkeit v_{c} der Coriolis-Masse m_{c} über eine Reglerschaltung auf den Kraft-Eingang F_{c}(t) am Drehratensensor DRS gegeben wird (Fig. 1), so treten in der Praxis Probleme auf. Der Regler darf bei der Resonanzfrequenz keine Phasendrehung besitzen. Der Regler muss Störungen ober-und unterhalb der Resonanzfrequenz unterdrücken. Diese Forderungen lassen sich beispielsweise nur mit einem Bandpass zweiter oder höherer Ordnung als Regler erfüllen. Jedoch muss dazu der Bandpass exakt bei der Schwinger-Resonanzfrequenz seine Mittenfrequenz besitzen. Da aber die Schwinger-Resonanzfrequenzen der Sensoren chargen- und exemplarabhängig sind, müsste der Bandpass aufwändig einzeln abgeglichen werden.

### Offenbarung der Erfindung und deren Vorteile:

Die Nachteile des Standes der Technik werden bei einem erfindungsgemäßen Verfahren zum Antrieb und zur gleichzeitigen Auswertung eines mindestens ein entlang einer ersten Schwingungsachse zu einer Schwingungsbewegung antreibbares Schwingerelement, sowie mindestens ein auf dem Schwingerelement angeordnetes, entlang einer zweiten, normal zu der ersten Schwingungsachse verlaufenden Schwingachse schwingfähig angeordnetes Coriolis-Element aufweisenden Drehratensensors vermieden durch die Verfahrensschritte:
- Erzeugen eines digitalen Antriebssignals mit einer der Resonanzfrequenz des Schwingerelements entsprechenden Anregungsfrequenz,
- Digital-Analog-Wandlung des digitalen Antriebssignals und Antrieb des Schwingerelements mit dem analogen Antriebssignal,
- Erfassung einer durch eine Drehung des Drehratensensors um eine normal zu den beiden Schwingungsachsen verlaufenden Drehachse entstehenden Coriolis-Geschwindigkeit des Coriolis-Elements und Erzeugung eines der Coriolis-Geschwindigkeit proportionalen, analogen Coriolis-Signals,
- Analog-Digital-Wandlung des analogen Coriolis-Signals in ein digitales Coriolis-Signal,
- phasenrichtige Multiplikation des digitalen Coriolis-Signals mit dem digitalen Antriebssignal zur Bildung eines den Kurzzeit-Mittelwert der Coriolis-Geschwindigkeit darstellenden Zwischensignals,
- Erzeugung eines der Drehrate der Drehung des Drehratensensors um die Drehachse proportionalen Regelsignals anhand des Zwischensignals,
- Multiplikation des Regelsignals mit dem digitalen Antriebssignal zu einem mit dem digitalen Antriebssignal phasengleichen, digitalen Kompensationssignal,
- Digital-Analog-Wandlung des digitalen Kompensationssignals zu einem mit dem analogen Antriebssignal phasengleichen, analogen Kompensationssignal, und Beaufschlagung des Coriolis-Elements mit dem analogen Kompensationssignal, zur Erzeugung einer der die Coriolis-Geschwindigkeit verursachenden, auf das Coriolis-Element einwirkenden Coriolis-Beschleunigung entgegenwirkenden, vorzugsweise elektrostatisch erzeugbaren Kompensationskraft, sowie
- Ausgabe des Regelsignals.

Der Begriff phasenrichtige Multiplikation bedeutet hierbei, dass die Phasenlage des digitalen Antriebsignals zur Multiplikation mit dem digitalen Coriolis-Signal um einen dem der Summe der Wandlungszeiten der Digital-Analog-Wandlung des digitalen Antriebssignals zum analogen Antriebssignal und der Analog-Digital-Wandlung des analogen Coriolis-Signals zum digitalen Coriolis-Signal entsprechendes Zeitintervall entsprechenden Wert verschoben wird.

Das erfindungsgemäße Verfahren vermeidet die Nachteile des Standes der Technik und stellt eine technisch einfach zu realisierende und abgleichfreie Lösung dar. Es wird insbesondere gewährleistet, dass die Regelung bei der Schwinger-Resonanzfrequenz immer exakt ein Kompensationssignal mit der Phasendrehung Null gegenüber dem Antriebssignal erzeugt. Dies wird vorzugsweise dadurch erreicht, indem durch Multiplikation des skalaren Regelsignals mit dem digitalen Antriebssignal ein digitales Kompensationssignal erzeugt wird, welches phasengleich mit dem Antriebssignal ist. Darüber hinaus sind die Wandlungszeiten des digitalen Antriebssignals zum analogen Antriebssignal und des digitalen Kompensationssignals zum analogen Kompensationssignal identisch, wodurch das analoge Kompensationssignal wiederum phasengleich mit dem analogen Antriebssignal ist. Das erfindungsgemäße Verfahren erlaubt insbesondere die Verwendung von kostengünstig herstellbarer digitaler Schaltungstechnik zur Kraftgegenkopplung in einem Drehratensensor. Das erfindungsgemäße Verfahren ermöglicht so die Realisierung einer linearen Kraftgegenkopplung der vom Coriolis-Effekt verursachten Kräfte auf die Coriolis-Masse in einem mikromechanischen Drehratensensor. Weiterhin wird eine Messgröße bereitgestellt, die zur äußeren Drehrate proportional ist.

Eine vorteilhafte Ausgestaltung des erfindungsgemäßen Verfahrens sieht vor, dass zur phasenrichtigen Multiplikation des digitalen Coriolis-Signals mit dem digitalen Antriebssignal das digitale Antriebssignal um ein der Summe der Wandlungszeiten der Digital-Analog-Wandlung des digitalen Antriebssignals zum analogen Antriebssignal und der Analog-Digital-Wandlung des analogen Coriolis-Signals zum digitalen Coriolis-Signal entsprechendes Zeitintervall verzögert der Multiplikation zugeführt wird.

Vorzugsweise werden vor der Erzeugung des Regelsignals die Anregungsfrequenz des Antriebssignals übersteigende Frequenzen beispielsweise mittels eines Tiefpassfilters aus dem Zwischensignal herausgefiltert. Hierzu wird das Zwischensignal durch ein Tiefpassfilter hindurchgeleitet. Grundsätzlich ist auch denkbar, zunächst das Regelsignal zu erzeugen und anschließend das Regelsignal durch ein Tiefpassfilter hindurchzuleiten. Die Tiefpassfiltration dient dabei im Wesentlichen dazu, die bei der Multiplikation entstehende doppelte Anregungsfrequenz zu unterdrücken. Darüber hinaus ist denkbar, vor Ausgabe des der Drehrate proportionalen Regelsignals beispielsweise an eine Anzeigevorrichtung oder an ein Steuergerät einer Fahrassistenzvorrichtung das Regelsignal auf eine gewünschte Bandbreite zu reduzieren. Dies kann beispielsweise mittels eines Tiefpassfilters erfolgen, welches Frequenzanteile aus dem Regelsignal vor dessen Ausgabe herausfiltert. Die Erzeugung des Regelsignals erfolgt vorzugsweise durch gewichtete Addition des Zwischensignals und des zeitlichen Integrals des Zwischensignals.

Eine vorteilhafte Ausgestaltung der Erfindung sieht eine Schaltungsanordnung zur Durchführung des erfindungsgemäßen Verfahrens vor, welche
- Mittel zur Erzeugung eines digitalen Antriebsignals mit einer der Resonanzfrequenz eines Schwingerelements eines Drehratensensors entsprechenden Anregungsfrequenz,
- Mittel zur Digital-Analog-Wandlung des digitalen Antriebsignals in ein analoges Antriebssignal zum Antrieb des Schwingerelements des Drehratensensors,
- Mittel zur Erfassung einer durch eine Drehung des Drehratensensors entstehenden Coriolis-Geschwindigkeit eines auf dem Schwingerelement angeordneten Coriolis-Elements und zur Erzeugung eines der Coriolis-Geschwindigkeit proportionalen, analogen Coriolis-Signals,
- Mittel zur Analog-Digital-Wandlung des analogen Coriolis-Signals in ein digitales Coriolis-Signal,
- Mittel zur phasenrichtigen Multiplikation des digitalen Antriebsignals mit dem Coriolis-Signal zur Bildung eines den Kurzzeit-Mittelwert der Coriolis-Geschwindigkeit darstellenden Zwischensignals,
- Mittel zur Erzeugung eines der Drehrate der Drehung des Drehratensensors um die Drehachse proportionalen Regelsignals anhand des Zwischensignals,
- Mittel zur Multiplikation des Regelsignals mit dem digitalen Antriebssignal zu einem mit dem digitalen Antriebssignal phasengleichen, digitalen Kompensationssignal,
- Mittel zur Digital-Analog-Wandlung des digitalen Kompensationssignals zu einem mit dem analogen Antriebssignal phasengleichen, analogen Kompensationssignal, und Beaufschlagung des Coriolis-Elements mit dem analogen Kompensationssignal, zur Erzeugung einer der die Coriolis-Geschwindigkeit verursachenden, auf das Coriolis-Element einwirkenden Coriolis-Beschleunigung entgegenwirkenden, elektrostatischen Kraft, sowie
- Mittel zur Ausgabe des Regelsignals
umfasst.

Vorzugsweise umfasst die erfindungsgemäße Schaltungsanordnung darüber hinaus Mittel zur Tiefpassfilterung des Zwischensignals. Die Tiefpassfilterung dient dabei im Wesentlichen der Unterdrückung von bei der Multiplikation des Coriolis-Signals mit dem Antriebssignal entstehenden doppelten Antriebsfrequenz.

Gemäß einer vorteilhaften Ausgestaltung der erfindungsgemäßen Schaltungsanordnung ist vorgesehen, dass die Mittel zur Erzeugung eines der Drehrate der Drehung des Drehratensensors um die Drehachse proportionalen Regelsignals Mittel zur gewichteten Summation des Zwischensignals und des zeitlichen Integrals des Zwischensignals umfassen. Dabei wird das zeitliche Integral des Zwischensignals mit dem Zwischensignal addiert. Dabei umfassen die Mittel zur gewichteten Addition des Zwischensignals und des zeitlichen Integrals des Zwischensignals vorzugsweise einen Proportional-Integral-Regler.

Gemäß einer weiteren vorteilhaften Ausgestaltung der erfindungsgemäßen Schaltungsanordnung ist vorgesehen, dass die Mittel zur phasenrichtigen Multiplikation des digitalen Antriebsignals mit dem digitalisierten Coriolis-Signal ein Verzögerungsglied umfassen, welches das der Multiplikation zuzuführende digitale Antriebssignal um ein der Summe der Wandlungszeiten des digitalen Antriebssignals in das analoge Antriebssignal und des analogen Coriolis-Signals in das digitale Coriolis-Signal in den jeweiligen Digital-Analog- und Analog-Digital-Wandlern entsprechendes Zeitintervall verzögert. Zwischen den Mitteln zur phasenrichtigen Multiplikation des digitalen Antriebsignals mit dem digitalen Coriolis-Signal und den Mitteln zur Erzeugung eines der Drehrate der Drehung des Drehratensensors um die Drehachse proportionalen Regelsignals kann ein Tiefpassfilter angeordnet sein, zum Herausfiltern von die Anregungsfrequenz des Antriebssignals übersteigenden Frequenzen aus dem Zwischensignal vor der Erzeugung des Regelsignals. Ebenso können die Mittel zur Ausgabe des Regelsignals ein zur Anpassung des Regelsignals an eine gewünschte Bandbreite geeignetes Tiefpassflter umfassen. Sowohl beim erfindungsgemäßen Verfahren, als auch bei der erfindungsgemäßen Schaltungsanordnung ist grundsätzlich denkbar, dass das Coriolis-Signal bereits vom Drehratensensor digital ausgegeben wird. In diesem Fall sind die Mittel zur Digitalisierung des Coriolis Signals im Drehratensensor angeordnet.

Kurzbeschreibung der Zeichnung, in der zeigen:
- Figur 1: eine Schaltungsanordnung zur Kraftgegenkopplung des Coriolis-Elements eines Drehratensensors nach dem Stand der Technik, sowie
- Figur 2: eine erfindungsgemäße Schaltungsanordnung zum gleichzeitigen Antrieb und Auswertung eines Drehratensensors.

### Wege zur Ausführung der Erfindung:

Eine erfindungsgemäße Schaltungsanordnung ist in Fig. 2 dargestellt. Im Folgenden wird zur Vereinfachung das die Antriebskraft zum Antrieb des Schwingerelements erzeugende Antriebssignal mit F(t) bezeichnet. Das Kompensationssignal, welches eine der Coriolis-Beschleunigung des Coriolis-Elements entgegenwirkende Kraft im Drehratensensor DRS bewirkt, wird im Folgenden mit F_{C}(t) bezeichnet. Ebenso wird das Coriolis-Signal zur Vereinfachung mit v_{C}(t) bezeichnet. Die Indizes analog und digital geben an, in welcher Form das jeweilige Signal an der jeweiligen Stelle vorliegt. In Fig. 2 stellt der Block VCO/NCO einen in Frequenz und Amplitude regelbaren Oszillator dar, der ein digitales, sinusförmiges Antriebssignal F(t)_{digital} zur Erzeugung der Antriebskraft für die das Schwingerelement bildende Masse m liefert. Der Block DRS enthält nicht nur den eigentlichen mikromechanischen Sensor, sondern auch die benötigten Schaltungen, um einen linearen, analogen Zusammenhang zwischen den Eingangssignalen F(t)_{analogy,} F_{c}(t)_{analog} und den entsprechenden Kräften auf die Masse m und die Coriolis-Masse m_{c} zu realisieren. Außerdem enthält der Block DRS ein Schaltung, die ein zu der momentanen Coriolis-Geschwindigkeit der Coriolis-Masse m_{c} proportionales analoges Coriolis-Signal v_{c}(t)_{analog} liefert.

Zunächst wird das analoge Coriolis-Signal v_{c}(t)_{analog} A/D-gewandelt und mit dem verzögerten digitalen Antriebssignal F(t)_{digital} mittels eines Multiplizierers M-1 phasenrichtig multipliziert. Die Verzögerung des digitalen Antriebssignals F(t)_{digital} erfolgt in einem Verzögerungsglied A/D-D/A-Delay. Die Verzögerung in dem Verzögerungsglied A/D-D/A-Delay ist so bemessen, dass sie der Summe der Wandlungszeiten der verwendeten Analog-Digital-Wandler A/D und Digital-Analog-Wandler D/A-1 oder D/A-2 entspricht. Somit wird das digitale Antriebssignal F(t)_{digital} vor der Multiplikation mit dem Analog-Digital gewandelten, analogen Coriolis-Signal v_{c}(t)_{analog} um genau die Summe der Wandlungszeit des digitalen Antriebssignals F(t)_{digital} im Digital-Analog-Wandler D/A-1 zum analogen Antriebssignal F(t)_{analog} und der Wandlungszeit des analogen Coriolis-Signals v_{c}(t)_{analog} zum digitalen Coriolis-Signal v_{c}(t)_{digital} im Analog-Digital-Wandler A/D verzögert. Die Digital-Analog-Wandler D/A-1 und D/A-2 besitzen dabei die Selbe Wandlungszeit. Durch die dem Multiplizierer M-1 nachfolgende Filterung durch den Tiefpass TP-1 mit einer Grenzfrequenz von beispielsweise 1 kHz wird die doppelte Schwingerfrequenz unterdrückt. Es entsteht ein Zwischensignal Z_{digital}, das dem Kurzzeit-Mittelwert der Momentan-Amplitude des Coriolis-Signals v_{c}(t) proportional ist. Dieses Zwischensignal Z_{digital} wird nun einem vorzugsweise einen Proportional-Integral-Regler umfassenden Regler P-I-R zugeführt, der die Aufgabe hat, das Coriolis-Signal v_{c}(t) möglichst genau auf dem Wert Null zu regeln. Der Regler P-I-R stellt an seinem Ausgang ein der Drehrate Ω einer Drehung des Drehratensensors DRS um eine normal zu den Schwingungsachsen des Schwingerelements und des Coriolis-Elements verlaufende Drehachse proportionales Regelsignal R_{digital} zur Verfügung. Der Ausgang des Reglers P-I-R ist mit einem weiteren Multiplizierer M-2 verbunden, der das vom Regler P-I-R erzeugte Regelsignal R_{digital} mit dem digitalen Antriebssignal F(t)_{digital} zu einem digitalen Kompensationssignal F_{C}(t)_{digital} multipliziert. Aufgrund der Multiplikation des einen Mittelwert des Coriolis-Signals v_{C}(t) bildenden, skalaren Regelsignals R_{digital} mit dem digitalen Antriebssignal F(t)_{digital} entsteht ein mit dem digitalen Antriebssignal F(t)_{digital} phasengleiches digitales Kompensationssignal F_{C}(t)_{digital}. Nach Wandlung des digitalen Kompensationssignals F_{C}(t)_{digital} in ein analoges Kompensationssignal Fc(t)_{analog} mittels des Digital-Analog-Wandlers D/A-2 gelangt das analoge Kompensationssignal F_{C}(t)_{analog} an den Kraftgegenkopplungseingang des Drehratensensors DRS.

Da die Digital-Analog-Wandler D/A-1 und D/A-2 die selben Wandlungszeiten aufweisen, ist das analoge Kompensationssignal F_{C}(t)_{analog} wiederum phasengleich mit dem analogen Antriebssignal F(t)_{analog}.

Gleichzeitig wird das am Ausgang des Reglers P-I-R vorliegende Regelsignal R_{di-gital} auf ein Tiefpassfilter TP-2 gegeben, wo die Bandbreite des Regelsignals R_{digital} auf einen benötigten Wert von beispielsweise 50 Hz reduziert wird. Der Ausgang des Tiefpasses liefert wiederum ein der Drehrate Ω proportionales Signal.

Das zur Erzeugung der Antriebskraft verwendete analoge Antriebssignal F(t)_{analog} und das zur Erzeugung der Kompensationskraft vorgesehene Kompensationssignal F_{c}(t)_{analog} sind beim erfindungsgemäßen Verfahren immer in Phase zueinander, was bei nach dem Stand der Technik bekannten Arten der Kraftgegenkopplung nicht der Fall ist. Dies wird einerseits dadurch erreicht, indem zunächst das einen Kurzzeit-Mittelwert bildenden, skalare Regelsignal R_{digital} durch phasenrichtige Multiplikation des digitalen Coriolis-Signals v_{c}(t)_{digital} mit dem digitalen Antriebssignal F(t)_{digital} erzeugt wird, wobei die Phasenlage des digitalen Antriebsignals F(t)_{digital} zur Multiplikation mit dem digitalen Coriolis-Signal v_{c}(t)_{digital} um einen dem der Summe der Wandlungszeiten der Digital-Analog-Wandlung des digitalen Antriebssignals F(t)_{digital} zum analogen Antriebssignal F(t)_{analog} und der Analog-Digital-Wandlung des analogen Coriolis-Signals v_{c}(t)_{analog} zum digitalen Coriolis-Signal v_{c}(t)_{digital} entsprechendes Zeitintervall entsprechenden Wert verschoben wird. Anschließend wird das skalare Regelsignal R_{digital} mit dem digitalen Antriebssignal F(t)_{digital} multipliziert, wodurch das mit dem digitalen Antriebssignal F(t)_{digital} phasengleiche digitale Kompensationssignal F_{C}(t)_{digital} erzeugt wird. Indem die Wandlungszeiten des digitalen Antriebssignals F(t)_{digital} zum analogen Antriebssignal F(t)_{analog} und des digitalen Kompensationssignals F_{C}(t)_{digital} zum analogen Kompensationssignal F_{C}(t)_{analog} identisch sind, wird erreicht, dass das analoge Kompensationssignal F_{C}(t)_{analog} wiederum phasengleich mit dem analogen Antriebssignal F(t)_{analog} ist.

Wichtig ist zu bemerken, dass der Proportional-Integral-Regler P-I-R und das Tiefpassfilter TP1 in Figur 2 grundsätzlich auch in umgekehrter Reihenfolge angeordnet sein können.

### Gewerbliche Anwendbarkeit:

Die Erfindung ist insbesondere im Bereich der Herstellung und dem Betrieb von Drehratensensoren, beispielsweise zur Verwendung in Kraftfahrzeugen, gewerblich anwendbar. Die Erfindung eignet sich beispielsweise für die kostengünstige und genaue Auswertung von Drehratensensoren für ESP, Wankneigungsausgleich und Navigation.

## Patentansprüche

1. Verfahren zum Antrieb und zur gleichzeitigen Auswertung eines mindestens ein entlang einer ersten Schwingungsachse zu einer Schwingungsbewegung antreibbares Schwingerelement, sowie mindestens ein auf dem Schwingerelement angeordnetes, entlang einer zweiten, normal zu der ersten Schwingungsachse verlaufenden Schwingachse schwingfähig angeordnetes Coriolis-Element aufweisenden Drehratensensors, umfassend die Verfahrensschritte:
- Erzeugen eines digitalen Antriebssignals mit einer der Resonanzfrequenz des Schwingerelements entsprechenden Anregungsfrequenz,
- Digital-Analog-Wandlung des digitalen Antriebssignals und Antrieb des Schwingerelements mit dem analogen Antriebssignal,
- Erfassung einer durch eine Drehung des Drehratensensors um eine normal zu den beiden Schwingungsachsen verlaufenden Drehachse entstehenden Coriolis-Geschwindigkeit des Coriolis-Elements und Erzeugung eines der Coriolis-Geschwindigkeit proportionalen, analogen Coriolis-Signals,
- Analog-Digital-Wandlung des analogen Coriolis-Signals, **gekennzeichnet durch**
- phasenrichtige Multiplikation des digitalen Coriolis-Signals mit dem digitalen Antriebssignal zur Bildung eines Zwischensignals,
- Erzeugung eines der Drehrate des Drehratensensors proportionalen Regelsignals anhand des Zwischensignals,
- Multiplikation des Regelsignals mit dem digitalen Antriebssignal zu einem mit dem digitalen Antriebssignal phasengleichen, digitalen Kompensationssignal,
- Digital-Analog-Wandlung des digitalen Kompensationssignals zu einem mit dem analogen Antriebssignal phasengleichen, analogen Kompensationssignal, und Beaufschlagung des Coriolis-Elements mit dem analogen Kompensationssignal, sowie
- Ausgabe des Regelsignals.

2. Verfahren nach Anspruch 1, wobei zur phasenrichtigen Multiplikation des digitalen Coriolis-Signals mit dem digitalen Antriebssignal das digitale Antriebssignal um ein der Summe der Wandlungszeiten des digitalen Antriebssignals zum analogen Antriebssignal und des analogen Coriolis-Signals zum digitalen Coriolis-Signal entsprechendes Zeitintervall verzögert der Multiplikation zugeführt wird.

3. Verfahren nach einem der Ansprüche 1 oder 2, wobei vor der Erzeugung des Regelsignals die Anregungsfrequenz des Antriebssignals übersteigende Frequenzen aus dem Zwischensignal herausgefiltert werden.

4. Verfahren nach einem der Ansprüche 1, 2 oder 3, wobei das Regelsignal vor der Ausgabe auf eine gewünschte Bandbreite reduziert wird.

5. Verfahren nach einem der vorhergehenden Ansprüche, wobei die Erzeugung des Regelsignals durch eine gewichtete Addition des Zwischensignals und eines zeitlichen Integrals des Zwischensignals erfolgt.

6. Schaltungsanordnung zur Durchführung des Verfahrens nach einem der Ansprüche 1 bis 5, **gekennzeichnet durch**
- Mittel zur Erzeugung eines digitalen-Antriebssignals mit einer der Resonanzfrequenz eines Schwingerelements eines Drehratensensors entsprechenden Anregungsfrequenz,
- Mittel zur Digital-Analog-Wandlung des digitalen Antriebsignals in ein analoges Antriebssignal zum Antrieb des Schwingerelements des Drehratensensors,
- Mittel zur Erfassung einer **durch** eine Drehung des Drehratensensors entstehenden Coriolis-Geschwindigkeit des Coriolis-Elements und zur Erzeugung eines der Coriolis-Geschwindigkeit proportionalen, analogen Coriolis-Signals,
- Mittel zur Analog-Digital-Wandlung des analogen Coriolis-Signals in ein digitales Coriolis-Signal,
- Mittel zur phasenrichtigen Multiplikation des digitalen Antriebsignals mit dem Coriolis-Signal zu einem Zwischensignal,
- Mittel zur Erzeugung eines der Drehrate des Drehratensensors proportionalen Regelsignals anhand des Zwischensignals,
- Mittel zur Multiplikation des Regelsignals mit dem digitalen Antriebssignal zu einem mit dem digitalen Antriebssignal phasengleichen, digitalen Kompensationssignal,
- Mittel zur Digital-Analog-Wandlung des digitalen Kompensationssignals zu einem mit dem analogen Antriebssignal phasengleichen, analogen Kompensationssignal, und Beaufschlagung des Coriolis-Elements mit dem analogen Kompensationssignal, sowie
- Mittel zur Ausgabe des Regelsignals.

7. Schaltungsanordnung nach Anspruch 6, **dadurch gekennzeichnet,**
**dass** die Mittel zur Erzeugung eines der Drehrate des Drehratensensors proportionalen Regelsignals Mittel zur zeitlichen Integration des Zwischensignals umfassen.

8. Schaltungsanordnung nach Anspruch 7, **dadurch gekennzeichnet,**
**dass** die Mittel zur zeitlichen Integration des Zwischensignals einen Proportional-Integral-Regler umfassen.

9. Schaltungsanordnung nach Anspruch 6, 7 oder 8, **dadurch gekennzeichnet,**
**dass** die Mittel zur phasenrichtigen Multiplikation des digitalen Antriebsignals mit dem digitalisierten Coriolis-Signal ein Verzögerungsglied umfassen, welches das der Multiplikation zuzuführende digitale Antriebssignal um ein der Summe der Wandlungszeiten des digitalen Antriebssignals in das analoge Antriebssignal und des analogen Coriolis-Signals in das digitale Coriolis-Signal entsprechendes Zeitintervall verzögert.

10. Schaltungsanordnung nach einem der Ansprüche 6 bis 9, **dadurch gekennzeichnet,**
**dass** zwischen den Mitteln zur phasenrichtigen Multiplikation des digitalen Antriebsignals mit dem digitalen Coriolis-Signal und den Mitteln zur Erzeugung eines der Drehrate des Drehratensensors proportionalen Regelsignals ein Tiefpassfilter angeordnet ist.

11. Schaltungsanordnung nach einem der Ansprüche 6 bis 10, **dadurch gekennzeichnet,**
**dass** die Mittel zur Ausgabe des Regelsignals ein Tiefpassfilter umfassen.

12. Schaltungsanordnung nach einem der Ansprüche 6 bis 11, **gekennzeichnet durch**
Mittel zur Tiefpassfilterung des Zwischensignals.

## Claims

1. Method for the operation and simultaneous evaluation of a rate-of-turn sensor comprising at least one oscillator element that can be operated to make an oscillatory movement along a first oscillation axis, and at least one Coriolis element arranged on the oscillator element and arranged so as to be capable of oscillation along a second oscillation axis extending perpendicular to the first oscillation axis, comprising the method steps:
- generation of a digital operating signal with an excitation frequency corresponding to the resonant frequency of the oscillator element,
- digital-analogue conversion of the digital operating signal and operation of the oscillator element with the analogue operating signal,
- measurement of a Coriolis speed of the Coriolis element caused by a rotation of the rate-of-turn sensor about an axis of rotation extending perpendicular to the two oscillation axes, and generation of an analogue Coriolis signal proportional to the Coriolis speed,
- analogue-digital conversion of the analogue Coriolis signal,
**characterized by**
- in-phase multiplication of the digital Coriolis signal with the digital operating signal to form an intermediate signal,
- generation of a control signal proportional to the rate of turn of the rate-of-turn sensor by using the intermediate signal,
- multiplication of the control signal with the digital operating signal to form a digital compensation signal with the same phase as the digital operating signal,
- digital-analogue conversion of the digital compensation signal to form an analogue compensation signal with the same phase as the analogue operating signal and application of the analogue compensation signal to the Coriolis element, and
- output of the control signal.

2. Method according to Claim 1, wherein, for the in-phase multiplication of the digital Coriolis signal with the digital operating signal, the digital operating signal is fed to the multiplication in a manner delayed by a time interval corresponding to the sum of the conversion times of the digital operating signal to the analogue operating signal and of the analogue Coriolis signal to the digital Coriolis signal.

3. Method according to either of Claims 1 and 2, wherein, before the generation of the control signal, frequencies exceeding the excitation frequency of the operating signal are filtered out of the intermediate signal.

4. Method according to one of Claims 1, 2 or 3, wherein the control signal is reduced to a desired bandwidth before the output.

5. Method according to one of the preceding claims, wherein the generation of the control signal is carried out by means of a weighted addition of the intermediate signal and a time integral of the intermediate signal.

6. Circuit arrangement for carrying out the method according to one of Claims 1 to 5,
**characterized by**
- means for the generation of a digital operating signal with an excitation frequency corresponding to the resonant frequency of an oscillator element of a rate-of-turn sensor,
- means for the digital-analogue conversion of the digital operating signal to an analogue operating signal to operate the oscillator element of the rate-of-turn sensor,
- means for the measurement of a Coriolis speed of the Coriolis element caused by a rotation of the rate-of-turn sensor and the generation of an analogue Coriolis signal proportional to the Coriolis speed,
- means for the analogue-digital conversion of the analogue Coriolis signal to a digital Coriolis signal,
- means for the in-phase multiplication of the digital operating signal with the Coriolis signal to form an intermediate signal,
- means for the generation of a control signal proportional to the rate of turn of the rate-of-turn sensor by using the intermediate signal,
- means for the multiplication of the control signal with the digital operating signal to form a digital compensation signal with the same phase as the digital operating signal,
- means for the digital-analogue conversion of the digital compensation signal to form an analogue compensation signal with the same phase as the analogue operating signal, and application of the analogue compensation signal to the Coriolis element, and
- means for the output of the control signal.

7. Circuit arrangement according to Claim 6,
**characterized in that**
the means for the generation of a control signal proportional to the rate of turn of the rate-of-turn sensor comprise means for the time integration of the intermediate signal.

8. Circuit arrangement according to Claim 7,
**characterized in that**
the means for the time integration of the intermediate signal comprise a proportional-integral controller.

9. Circuit arrangement according to Claim 6, 7 or 8,
**characterized in that**
the means for the in-phase multiplication of the digital operating signal with the digitized Coriolis signal comprise a delay element, which delays the digital operating signal to be fed to the multiplication by a time interval corresponding to the sum of the conversion times of the digital operating signal to the analogue operating signal and of the analogue Coriolis signal to the digital Coriolis signal.

10. Circuit arrangement according to one of Claims 6 to 9,
**characterized in that**
between the means for the in-phase multiplication of the digital operating signal with the digital Coriolis signal and the means for the generation of a control signal proportional to the rate of turn of the rate-of-turn sensor there is arranged a low-pass filter.

11. Circuit arrangement according to one of Claims 6 to 10,
**characterized in that**
the means for the output of the control signal comprise a low-pass filter.

12. Circuit arrangement according to one of Claims 6 to 11,
**characterized by**
means for the low-pass filtering of the intermediate signal.

## Revendications

1. Procédé d'entraînement et d'interprétation simultanée d'un capteur de vitesse de rotation possédant au moins un élément oscillateur pouvant être entraîné en un mouvement oscillant le long d'un premier axe d'oscillation ainsi qu'au moins un élément de Coriolis disposé sur l'élément oscillateur, disposé de manière oscillante le long d'un deuxième axe d'oscillation qui s'étend sur la normale au premier axe d'oscillation, comprenant les étapes suivantes :
- génération d'un signal d'entraînement numérique ayant une fréquence d'excitation correspondant à la fréquence de résonance de l'élément oscillateur,
- conversion numérique/analogique du signal d'entraînement numérique et entraînement de l'élément oscillateur avec le signal d'entraînement analogique,
- détection d'une vitesse de Coriolis de l'élément de Coriolis, produite par une rotation du capteur de vitesse de rotation autour d'un axe de rotation qui s'étend sur la normale aux deux axes d'oscillation, et génération d'un signal de Coriolis analogique proportionnel à la vitesse de Coriolis,
- conversion analogique/numérique du signal de Coriolis analogique,
**caractérisé par**
- multiplication en phase du signal de Coriolis numérique par le signal d'entraînement numérique en vue d'obtenir un signal intermédiaire,
- génération d'un signal de régulation proportionnel à la vitesse de rotation du capteur de vitesse de rotation à l'aide du signal intermédiaire,
- multiplication du signal de régulation par le signal d'entraînement numérique en vue d'obtenir un signal de compensation numérique en concordance de phases avec le signal d'entraînement numérique,
- conversion numérique/analogique du signal de compensation numérique en vue d'obtenir un signal de compensation analogique en concordance de phases avec le signal d'entraînement analogique, et application du signal de compensation analogique à l'élément de Coriolis, ainsi que
- délivrance du signal de régulation.

2. Procédé selon la revendication 1, selon lequel, pour la multiplication en phase du signal de Coriolis numérique par le signal d'entraînement numérique, le signal d'entraînement numérique est acheminé à la multiplication en retard d'un intervalle de temps correspondant à la somme des temps de conversion du signal d'entraînement numérique en le signal d'entraînement analogique et du signal de Coriolis analogique en le signal de Coriolis numérique.

3. Procédé selon l'une des revendications 1 ou 2, selon lequel, avant la génération du signal de régulation, les fréquences qui sont supérieures à la fréquence d'excitation du signal d'entraînement sont éliminées par filtrage du signal intermédiaire.

4. Procédé selon l'une des revendications 1, 2 ou 3, selon lequel le signal de régulation est réduit à une largeur de bande souhaitée avant d'être délivré.

5. Procédé selon l'une des revendications précédentes, selon lequel la génération du signal de régulation est effectuée par une addition pondérée du signal intermédiaire et d'une intégrale dans le temps du signal intermédiaire.

6. Arrangement de circuit destiné à mettre en oeuvre le procédé selon l'une des revendications 1 à 5, **caractérisé par**
- des moyens destinés à la génération d'un signal d'entraînement numérique ayant une fréquence d'excitation correspondant à la fréquence de résonance d'un élément oscillateur d'un capteur de vitesse de rotation,
- des moyens destinés à la conversion numérique/analogique du signal d'entraînement numérique en un signal d'entraînement analogique servant à l'entraînement de l'élément oscillateur du capteur de vitesse de rotation,
- des moyens destinés à la détection d'une vitesse de Coriolis de l'élément de Coriolis, produite par une rotation du capteur de vitesse de rotation, et à la génération d'un signal de Coriolis analogique proportionnel à la vitesse de Coriolis,
- des moyens destinés à la conversion analogique/numérique du signal de Coriolis analogique en un signal de Coriolis numérique,
- des moyens destinés à la multiplication en phase du signal d'entraînement numérique par le signal de Coriolis en vue d'obtenir un signal intermédiaire,
- des moyens destinés à la génération d'un signal de régulation proportionnel à la vitesse de rotation du capteur de vitesse de rotation à l'aide du signal intermédiaire,
- des moyens destinés à la multiplication du signal de régulation par le signal d'entraînement numérique en vue d'obtenir un signal de compensation numérique en concordance de phases avec le signal d'entraînement numérique,
- des moyens destinés à la conversion numérique/analogique du signal de compensation numérique en vue d'obtenir un signal de compensation analogique en concordance de phases avec le signal d'entraînement analogique, et application du signal de compensation analogique à l'élément de Coriolis, ainsi que
- des moyens destinés à la délivrance du signal de régulation.

7. Arrangement de circuit selon la revendication 6, **caractérisé en ce que** les moyens destinés à la génération d'un signal de régulation proportionnel à la vitesse de rotation du capteur de vitesse de rotation comprennent des moyens destinés à l'intégration dans le temps du signal intermédiaire.

8. Arrangement de circuit selon la revendication 7, **caractérisé en ce que** les moyens destinés à l'intégration dans le temps du signal intermédiaire comprennent un régulateur proportionnel-intégral.

9. Arrangement de circuit selon la revendication 6, 7 ou 8, **caractérisé en ce que** les moyens destinés à la multiplication en phase du signal d'entraînement numérique par le signal de Coriolis numérisé comprennent un élément de retard qui retarde le signal d'entraînement numérique à acheminer à la multiplication d'un intervalle de temps correspondant à la somme des temps de conversion du signal d'entraînement numérique en le signal d'entraînement analogique et du signal de Coriolis analogique en le signal de Coriolis numérique.

10. Arrangement de circuit selon l'une des revendications 6 à 9, **caractérisé en ce qu'**un filtre passe-bas est disposé entre les moyens destinés à la multiplication en phase du signal d'entraînement numérique par le signal de Coriolis numérique et les moyens destinés à la génération d'un signal de régulation proportionnel à la vitesse de rotation du capteur de vitesse de rotation.

11. Arrangement de circuit selon l'une des revendications 6 à 10, **caractérisé en ce que** les moyens destinés à la délivrance du signal de régulation comprennent un filtre passe-bas.

12. Arrangement de circuit selon l'une des revendications 6 à 11, **caractérisé par** des moyens de filtrage passe-bas du signal intermédiaire.
